Europäisches Patentamt
European Patent Office
Office européen des brevets

(11) Publication number: 0 117 156 A1

# EUROPEAN PATENT APPLICATION

(21) Application number: 84301126.3

(22) Date of filing: 22.02.84

(51) Int. Cl.³: C 07 F 9/50
C 07 F 9/48, C 07 F 9/52
C 07 C 103/50

(30) Priority: 22.02.83 GB 8304823

(43) Date of publication of application: 29.08.84 Bulletin 84/35

(84) Designated Contracting States: BE CH DE FR GB IT LI NL

(71) Applicant: The British Petroleum Company p.l.c.
Britannic House Moor Lane
London EC2Y 9BU(GB)

(72) Inventor: Green, Malcolm L.H. The University of Oxford
Inorganic Chemistry Laboratory South Parks Road
Oxford, OX1 3QR(GB)

(74) Representative: Harry, John et al,
c/o The British Petroleum Company plc Patents Division
Chertsey Road
Sunbury-on-Thames Middlesex TW16 7LN(GB)

(54) **Process for the production of trans-1,2-(dihalophosphino) cycloalkanes.**

(57) The invention relates to novel trans-1,2-bis(dihalophosphino)-cycloalkanes (I) wherein the alkane moiety contains from 3 to 12 carbon atoms, trans-1,2-bis[di(X)-phosphino]cycloalkanes (II) wherein the alkane moiety contains from 3 to 12 carbon atoms and X is either hydrocarbyl or alkoxy and the resolved enantiometers of (II). Compounds (I) are produced by reacting a $C_3$ to $C_{12}$ cyclic olefin with a trivalent phosporous compound of the formula $PX_3$ wherein X is chlorine or bromine in the presence of elemental phophorous. Compounds (I) are converted to compounds (II) by reaction with an (X)-containing carbon nucleophile.

EP 0 117 156 A1

# PROCESS FOR THE PRODUCTION OF TRANS-1,2-(DIHALOPHOSPHINO)CYCLOALKANES

The present invention relates in general to a process for the production of trans-1,2-bis(dihalophosphino)cycloalkanes and derivatives thereof.

Trans-1,2-bis(dihalophosphino)cycloalkanes are readily converted to trans-1,2-bis(dihydrocarbyl phosphino)cycloalkanes which are useful as ligands in asymmetric synthesis, ie a reaction that converts a prochiral centre into a chiral centre in such a way that the enantiomers are produced in unequal amounts. Two catalytic asymmetric syntheses that have been studied extensively are hydrogenation and hydrosilylation. The catalysts contain optically active ligands coordinated to a transition metal. The majority of the reactions studied use rhodium as the metal although reactions with cobalt, nickel, palladium, copper, etc are also known. The chiral ligands are generally phosphines, some of the most successful ligands being bidentate bisphosphines. Other asymmetric syntheses which have been studied use hydroformylation and carbonylation, though the stereoselectivities observed in these syntheses were much less satisfactory than in asymmetric hydrogenation reactions.

US Patent No 3,976,690 (Stauffer Chemical Company) describes a process for the production of alkane bis-dihalophosphines by reacting an olefin of formula $(R_1)(R_2)C = C(R_3)(R_4)$ wherein $R_1$, $R_2$, $R_3$ and $R_4$ are independently selected from a group consisting of hydrogen and lower

alkyl of from 1 to 10 carbon atoms with a trivalent phosphorus compound of the formula $PX_3$ wherein X is chlorine or bromine in the presence of elemental phosphorus. The reaction is conducted at a temperature of from about 150°C to about 350°C under at least autogenous pressure.

According to the present invention there is provided a process for the production of a trans-1,2-bis(dihalophosphino)cycloalkane which process comprises reacting a $C_3$ to $C_{12}$ cyclic olefin with a trivalent phosphorus compound of the formula:

$$PX_3$$

wherein X is chlorine or bromine in the presence of elemental phosphorus.

Preferably the cyclic olefin contains from 3 to 10, even more preferably from 5 to 10 carbon atoms. Suitable cyclic olefins include cyclopropene, cyclobutene, cyclopentene, cyclohexene, cycloheptene, cyclononene and cyclodecene. Alternatively, the cyclic olefin may be substituted by, for example, alkyl groups or functional groups such as halogroups. Preferred cyclic olefins include cyclopentene and cyclohexene. Cyclic diolefins may also be used.

Preferably the trivalent phosphorus compound is phosphorus trichloride.

The reaction is carried out in the presence of elemental phosphorus. The elemental phosphorus may be used in any of its common elemental forms including white (or yellow) or red. Preferably the phosphorus is in the white form.

The process may be operated in the presence of a diluent. Suitable diluents include hydrocarbons, which may be aliphatic or aromatic, or halosubstituted. Examples of suitable diluents include benzene, toluene and hexane. Alternatively, the trivalent phosphorus compound may itself be used as a diluent.

It is preferred to operate the process under substantially anhydrous conditions. The use of an inert atmosphere, such as nitrogen or argon, may also be advantageous.

The relative proportions of reactants may suitably be varied

over a wide range. Generally, from 2 to 4 moles of cyclic olefin to 4 to 10 moles of the trivalent phosphorus compound to 1 to 3 gram atoms of phosphorus will be found suitable. It is preferred to use an excess of the trivalent phosphorus compound.

The process may be operated at a temperature in the range from 100 to 300°C, preferably from 200 to 300°C. Using a closed reaction vessel, the pressure may vary from autogenous up to 200 atmospheres above autogenous pressure.

The process may be operated batchwise or continuously, preferably continuously.

The products of the process of the present invention may be recovered and purified in conventional manner, suitably by fractional distillation, crystallisation or solvent extraction.

Trans-1,2-bis(dihalophosphino)cycloalkanes may be converted into either the corresponding trans-1,2-bis(dihydrocarbyl phosphino)cycloalkanes or the corresponding trans-1,2-bis(dialkoxyphosphino)cycloalkanes by reaction with a suitable carbon nucleophile, for instance a suitable Grignard reagent.

In another aspect therefore the invention provides a process for the production of a trans-1,2-bis(di(X)phosphino)cycloalkane, wherein X is hydrocarbyl or alkoxy, which process comprises reacting a trans-1,2-bis(dihalophosphino)cycloalkane with an (X)-containing carbon nucleophile wherein X is hydrocarbyl or alkoxy under appropriate reaction conditions.

Suitably the (X)-containing carbon nucleophile may be a Grignard reagent, for example an (X) magnesium halide, wherein X is hydrocarbyl or alkoxy. Suitably the hydrocarbyl substituent of the hydrocarbyl magnesium halide may be an alkyl group which may be for example a methyl, ethyl, propyl or butyl group, or a cycloalkyl group such as cyclohexyl, or a phenyl group. Suitably the alkoxy substituent of the alkoxy magnesium halide may be for example methoxy, ethoxy or butoxy. The halide moiety is preferably either chloride or bromide.

It is preferred to employ a diluent. Suitable diluents include

oxygenated hydrocarbons, such as, for example, tetrahydrofuran.

The process may be operated at ambient or elevated temperature and at atmospheric pressure. Suitably, the reactants may be mixed at room temperature and the mixture thereafter refluxed.

The trans-1,2-bis(dihydrocarbylphosphino)cycloalkanes may be resolved into their separate enantiomers in conventional manner. In the particular case of trans-1,2-bis(diphenylphosphino)cyclopentane, reaction with nickel (11) halide may be effected in alcoholic media to produce the corresponding nickel (11) halide adduct, which may thereafter be crystallised from, for example, dichloromethane with a molecule of dichloromethane of crystallisation as the conglomerate nickel (11) halide [trans-1, 2-bis(diphenylphosphino)cyclopentane dichloromethane]. Separation of this latter conglomerate into (+)-(S,S) and (-)-(S,S) enantiomers may be effected manually by crystal picking. Thereafter the (-)-(S,S)-trans-1,2-bis(diphenylphosphino)cyclopentane may be recovered by treatment of the (+)-(S,S) enantiomer with sodium cyanide.

The resolved enantiomers of trans-1,2-bis(dihydrocarbylphosphino)cycloalkanes so-obtained may be used as chiral ligands in asymmetric synthesis, such as for example hydrogenation, hydrosilylation, hydroformylation and carbonylation.

The invention will now be illustrated by reference to the following Examples.

All preparations and manipulations were carried out in vacuo or under a nitrogen atmosphere. Solvents were dried and distilled before use. I.R. spectra were determined for Nujol mulls on a Unicam SF 2000 instrument. N.M.R. spectra were measured at room temperature in dried $C_6D_6$ for the products of Examples 1, 3 and 8; in dried $CD_2Cl_2$ for all other compounds. The N.M.R. spectra were recorded on Bruker WH $300KH_Z$ and Bruker AM $250MH_Z$ instruments. Optical rotations were measured at 20°C in $CH_2Cl_2$ on a Perkin Elmer 241 polarimeter at a concentration of 1.0 $mg/cm^3$ for the product of Example 2 and at 0.1 $mg/cm^3$ for all other compounds, the single crystals being weighed on an electromicrobalance.

## A. SYNTHESIS OF COMPOUNDS

### Example 1

### Trans-1,2-bis(dichlorophosphino)cyclopentane

A 1.1 litre stainless steel autoclave, supplied by Baskerville Co, was charged with phosphorus trichloride (510g, 3.92 mol), white phosphorus (29 g, 0.23 mol) and dried and freshly distilled cyclopentene (180g, 2.65 mol). The mixture was stirred and the temperature was raised over a period of 24 hours until it reached 215°C. The mixture was maintained at this temperature with stirring for 40 hours when it was allowed to cool to room temperature. The brown liquid product was extracted and was washed from the autoclave with dry tetrahydrofuran (400 $cm^3$). The extract was filtered and the more volatile components were removed under reduced pressure at room temperature. The residual dark brown liquor was distilled under reduced pressure. There was a volatile fraction which distilled at 36-38°C (0.5 mm/Hg) (12.56g) shown to be $PCl_2C_5H_9$ (12.5g, 15%) and a second main fraction distilled at 103-105°C at 0.1mm/Hg (109.2g). The brown tarry residue was discarded.

The second product was carefully redistilled and the fraction which distilled at 119-122°C and 0.1 mmHg was collected and shown to be the pure compound. Yield 37.5 $cm^3$.

### Example 2

### Trans-bis-1,2-(diphenylphosphino)cyclopentane

Trans-bis-1, 2-(dichlorophosphino) cyclopentane (10.1g, 37.0 mmol) obtained as in Example 1, in dried tetrahydrofuran (200 $cm^3$) was added dropwise to a stirred solution of phenylmagnesium bromide (150 $cm^3$ of a 1.3 M solution in tetrahydrofuran) at room temperature. After the addition was complete the mixture was refluxed for 1 hour. The mixture was allowed to cool then aqueous ammonium chloride (ca 100 $cm^3$) was added to hydrolyse the excess of the Grignard reagent. Water (300 $cm^3$) was then added and the mixture was shaken. The organic products were extracted with several portions of diethyl ether (4 x 100 $cm^3$) and the ethereal extracts were combined and dried over anhydrous sodium sulphate. The solvent was removed under

reduced pressure and the resulting cream solid was extracted with petroleum ether (60-80°C) (3 x 150 $cm^3$). The extracts were filtered, and concentrated under reduced pressure giving large white crystals which were collected, washed with petroleum ether (40-60°C) and dried *in vacuo*. Yield 12.5g, 77.1%.

Example 3

Trans-1,2-bis(dimethylphosphino)cyclopentane

Dry magnesium turnings (24.8g; 1.03 moles) and methyl iodide (125.9g; 0.88 moles), dried over molecular sieve, were reacted in diethyl ether to give 570 $cm^3$ of 0.72M methyl Grignard (standardised against HCl). Trans-1,2-bis(dichlorophosphino)cyclopentane (27.6g; 0.10 moles), obtained as in Example 1, in degassed tetrahydrofuran (400 $cm^3$) was added in 90 minutes at room temperature to the Grignard reagent, with gentle refluxing for an additional 90 minutes. Excess Grignard was carefully destroyed by addition of degassed, saturated $NH_4Cl$ (135g), followed by degassed water (135g). The organic layer was separated and dried over $MgSO_4$ for four days. The dried, filtered solution was concentrated under reduced pressure at room temperature, giving a pale yellow liquid. Distillation in an all-glass apparatus gave 7.6g (41%) of a colourless liquid, b.p. 82-83°C at 1.5mm Hg. The compound is very sensitive to oxidation in air, but is stable under a nitrogen atmosphere.

Example 4

Trans-1,2-bis(diphenylphosphino)cyclopentanenickel(11) Bromide

Anhydrous nickel(II) bromide (5.1g, 0.023 moles) was heated in water (15 $cm^3$) to dissolve. Ethanol (105 $cm^3$) was added and the green solution filtered, to remove insoluble, olive-green NiO, and degasssed. The phosphine as obtained in Example 2 (10.1g, 0.023 moles), dissolved in hot, degassed ethanol (400 $cm^3$) was added with stirring to the nickel bromide solution at 60-70°C. The purple-red microcrystalline product came out of solution quickly. The supernatant liquor was removed by filtration, the product washed in cold ethanol (2 x 10 $cm^3$) and finally dried in vacuo at 50°C; yield 8.9g, 57%. The yield could have presumably been increased by

reducing the volume of the supernatant liquor, which was red, the large volume of ethanol being necessary to dissolve the phosphine initially. The compound is soluble in dichloromethane (about 30mg/$cm^3$), sparingly soluble in acetone and stable in air.

Example 5

Trans-1,2-bis(diphenylphosphino)cyclopentanenickel(II) Chloride

To nickel(II) chloride hexahydrate (1.69g, 7.1 mmoles), dissolved in ethanol )50 $cm^3$) was added the phosphine as obtained in Example 2 (2.87g, 6.6 mmoles) dissolved in hot ethanol (200 $cm^3$) and the preparation continued as for Example 4; yield 3.3g, 72%. The red-orange compound is soluble in methylene chloride and is stable in air.

Example 6

Trans-1,2-bis(diphenylphosphino)cyclopentanemolybdenum Tetracarbonyl

Molybdenum hexacarbonyl (1.08g, 4.1 mmoles) was reacted with the phosphine as obtained in Example 2 (1.79g, 4.1 mmoles) in light petroleum (b.p. 100-120°C) in the dark at 105°C with vigourous stirring under nitrogen for three days. A considerable amount of product was evident after six hours, suggesting that the reaction was much faster than the analogous reaction with 1,2-bis(diphenylphosphino)ethane which was also carried out under identical conditions. The supernatant liquor was removed and the cream-coloured amorphous product washed with light petroleum(100-120°C) and dried in vacuo at 75°C, all manipulations being done with exclusion of light as much as possible; yield 2.44g, 85%. The compound is photosensitive in the solid and in solution, rapidly turning yellow in sunlight, and air sensitive, turning grey-blue. The compound is soluble in dichloromethane and toluene. Sizeable crystals can be grown by slow evaporation, in a nitrogen atmosphere, of a dichloromethane solution of the compound.

Example 7

Bis[trans-1,2-bis(dimethylphosphino)cyclopentane]nickel(II) Bromide

Anhydrous nickel(II) bromide (1.67g, 7.6 mmoles) was heated in water (5 $cm^3$) to dissolve. Ethanol (50 $cm^3$) was added, the green solution filtered to remove the insoluble NiO, and degassed. The

phosphine as obtained in Example 3 (1.35g, 7.1mmoles), dissolved in degassed ethanol(35cm$^3$) was added slowly with stirring to the nickel bromide solution at 60-70°C. The solution immediately turned deep red but the product was much more soluble in ethanol than was the tetraphenyl analogue (Example 4). The deep red liquor was concentrated to about 20cm$^3$ under reduced pressure and cooled to -30°C for twelve hours. Red-orange crystals separated, which were collected, washed with cold ethanol (2x2cm$^3$) and finally dried in vacuo at 50°C; yield 1.29g, 61% yield.

Example 8

Trans-1,2-bis(dichlorophosphino)cyclohexane

White phosphorus(30.7g, 0.25moles), degassed phosphorus trichloride(515 g, 3.7moles) and redistilled cyclohexene(205.5g, 2.5moles) were placed in a 1-liter high pressure autoclave under a nitrogen atmosphere. During an initial period of 30 hours, the temperature was slowly raised to 225°C and held there for 44 hours, with vigourous stirring of the reaction mixture. The maximum pressure was 12 atmospheres. The products were transferred from the autoclave with degassed tetrahydrofuran(400cm$^3$), the mixture filtered and the solvent removed under reduced pressure at 50°C, giving a clear, dark brown, viscous liquor. In the preparation of the compound, there was inevitably about 15-20g of finely divided, red phosphorus present in the autoclave after the reaction period. There was also evidence of unreacted cyclohexene and phosphorus trichloride. Distillation in an all-glass apparatus, with a 10-inch column, gave fractions of 115g(60-65°C) and 38 g(123-125°C) at 2.0mm/Hg, the latter being the desired tetrachloride, an air sensitive, viscous liquid.

Example 9

Trans-1,2-bis(diphenylphosphino)cyclohexane

Tetrahydrofuran(400cm$^3$) was added to 560cm$^3$ of 0.64M phenylmagnesium bromide in diethyl ether. The tetrachloride as obtained in Example 8 (25.1g, 0.088moles) in tetrahydrofuran(350cm$^3$) was addedd dropwise to the Grignard reagent, over a period of 2 hours, with heating to reflux for an additional 1.5 hours. The

mixture stood at room temperature overnight and the excess Grignard reagent was carefully destroyed by addition of degassed, saturated $NH_4Cl$(165g) and degassed water(185g). The large amount of cream-coloured precipitate present after addition of the $NH_4Cl$ redissolved on addition of the water. The mixture was shaken vigourously and the pale yellow organic layer dried over $Na_2SO_4$ for two days. The volatile solvents were removed under reduced pressure, leaving a pale yellow, waxy solid. Recrystallization in degassed light petroleum (b.p. 100-120°C) gave a white solid which was dried in vacuo, yield: 19.6g, 49%. Recrystallization from toluene is also possible, giving the crystal on which the crystallographic analysis was performed. The solid compound is stable in air, but air sensitive in solution.

Example 10

Trans-1,2-bis(diphenylphosphino)cyclohexanenickel(II) Bromide

Anhydrous nickel(II) bromide (3.25g, 14.8mmoles) was heated in water(25cm$^3$) to dissolve. Ethanol (150cm$^3$) was added, the green solution filtered to remove the insoluble, olive-green NiO, and degassed. The phosphine as obtained in Example 9 (5.83g, 12.9mmoles), dissolved in hot ethanol (240cm$^3$), was added slowly with stirring to the nickel bromide solution at 60-70°C. The solution instantly turned deep red and the purple-red, microcrystalline product quickly precipitated. The red supernatant liquor was removed by filtration, the product washed in cold ethanol (2 x 15cm$^3$) and dried in vacuo at 50°C; yield 4.98g, 57%. The compound is soluble in dichloromethane (about 35mg/cm$^3$), sparingly soluble in acetone and stable in air.

Example 11

Trans-1,2-bis(diphenylphosphino)cyclohexanenickel(II) Chloride

To nickel(II) chloride hexahydrate (0.94, 3.90mmoles) dissolved in ethanol(125cm$^3$) was added the phosphine as obtained in Example 9 (1.7 g; 3.93 mmoles) dissolved in hot ethanol(250 cm$^3$) and the preparation continued as in Example 10. The yield was 1.65g; 61%. The red-orange compound is soluble in dichloromethane and stable in air.

Example 12

Trans-1,2-bis(diphenylphosphino)cyclohexanemolybdenum Tetracarbonyl

Molybdenum hexacarbonyl (1.22g, 4.6mmoles) was reacted with the phosphine as obtained in Example 9 (2.13g, 4.7mmoles) in light petroleum (100-120°C) in the dark at 100°C with vigourous stirring under an inert atmosphere for three days. As in the reaction with the analogous cyclopentane phosphine, there was evidence of extensive reaction after six hours. The supernatant liquor was removed by filtration and the cream-coloured amorphous solid washed with light petroleum (b.p. 100-120°C) and dried in vacuo at 75°C; yield 2.68g. 81%. The compound is soluble in dichloromethane and toluene; sizeable crystals may be grown by slow evaporation, in a nitrogen atmosphere, of a dichloromethane solution of the compound. The compound is photosensitive, turning yellow rapidly as the solid or in solution in sunlight, and is air sensitive, turning grey-blue.

The elemental analyses and N.M.R. spectroscopic data for the products of Examples 1 to 12 are given in Table 1.

Selected infrared spectral data are given in Table 2.

Table 1

N.M.R. Spectroscopic Data

| Example | Analysis (%) a | | | | N.M.R. data b |
|---|---|---|---|---|---|
| | C | H | Metal | Halide | |
| 1 | 22.6 (22.1) | 2.4 (2.9) | - - | 52.4 52.2 | $^{1}H$ n.m.r.: 1.46,2,m binomial quintet (J ca 7) 2H[a];1.78,4,apparent sextet 1:3:4:4:3:1 (J 7,J(P-H)13); $4H_b$; 2.48,2,multiplet, 22 lines (J(P-H),$J^1$(P-H) 20.0 and 7.1, J 6.2,7.2),$2H_c$.[d] $^{13}C$ n.m.r.:Broad band proton decoupled: 26.94,1,s,$C_a$; 29.54, 2.d (J(P-C) 13.5)$2C_b$; 50.45,2,doublet of doublets (J(P-C) 50.9,12.4),$1C_c$ Proton coupled spectrum:26.94,1,t(JC-H 97.3),h ; 29.54,2, doublet of triplets (J(C-H)104.2,J(P-C) 13.5,$2H_b$; 50.54,2, doublet of doublet of doublets (J(C-H)103.8, J(C-P)50.9 and 12.4). $^{31}P$ n.m.r., broad band decoupled: 184.5(TMP) singlet.[c] |
| 2 | 79.3 (79.5) | 6.1 (6.4) | - - | - - | 1.67,2,c 9 lines,$2H_b$; 1.88,2,c 8 lines,$2H_a$; 2.27,2,m triplet of triplets (J 8,J(P-H) 20)$2H_c$; 2.78,2,c 11 lines,$2H_b$; 7.18,8,c, ortho H of 4Ph; 7.33,8,c,meta H of 4Ph; 7.46,4,c, para H of 4Ph[d] |
| 3 | air sensitive - not determined | | | | |

Table 1 (continued)

N.M.R. Spectroscopic Data

| Example | Analysis (%) a | | | | N.M.R. data b | |
|---|---|---|---|---|---|---|
| | C | H | Metal | Halide | | |
| 4 | 52.62 (53.02) | 4.34 (4.30) | Ni=8.86 (Ni=8.94) | 25.19 (24.33) | $^1H$ | |
| | 48.62e (48.56) | 3.97e (4.08) | | | $^{13}C$ | Broadband proton decoupled 23.28.2.s.$C_a$;30. 1,t,2$C_b$; 47.88,1,t,2$C_c$; 128.85,4,s; 129.05.4, 131.75,2,s; 132.71,2,s: 133,60,4,s; 137.21,4. |
| | | | | | $^{31}P$ | Broadband decoupled: 32.5(TMP),s. |
| 5 | 61.30 (61.31) | 5.03. (4.97) | 10.12 (10.34) | 12.59 (12.49) | $^1H$ | 1.13,2,c,2$H_b$: 1.68,2,c,2$H_a$;1.93,2,c,2$H_c$; 2.67,2,c,2$H_b$; 7.51,4,c; 7.65,8,c; 7.78,4, s,broad; 8.32,4,s,broad,4Phenyl groups. |
| | | | | | $^{13}C$ | Broadband proton decoupled, 23.22,2,s,$C_a$; 30.41,1,s,$C_b$; 47.38,2,t,(J(P-C)=25.7),2$C_c$; 128.99,4,s; 129.11,4,s; 131.78,2,s; 132,74,2,s; 133.54,4,s; 136.99,4,s. |
| | | | | | $^{31}P$ | Broadband decoupled 25.9(TMP),s. |

Table 1 (continued)

N.M.R. Spectroscopic Data

| Example | Analysis (%) a | | | | N.M.R. data b | |
|---|---|---|---|---|---|---|
| | C | H | Metal | Halide | | |
| 6 | 61.15<br>(61.31) | 4.46<br>(4.37) | Mo=9.37<br>(Mo=14.84) | -<br>- | $^{1}H$ | 1.13,2,broad,$2H_a$; 1.90,4,broad,$4H_b$; 2.76,2 s,$2H_c$; 7.41,4,c; 7.49,2,c; 7.67,2,c. |
| | | | | | $^{13}C$ | Broadband proton decoupled; 25.51,2,s,$2C_b$; 30.51,1,unresolved t,$C_a$; 49.51,2,t,(J(C-P)=21.7),$2C_c$; 128.57,4,t,(J(?)=4.2); 128.96,4,t,(J(?)=4.1); 129,91,2,s; 130.55,2,s; 132.08,4,t,(J(?)=5.2); 134.44,4,t,(J(?)=6.3); 211.39,weak,c; 217.43,weak,c.<br><br>Proton coupled, phenyl region only; 128.59, d of unresolved m, (J(C-H)=121); 128.97,d,(J(C-H)=118); 129.90,d,(J(C-H)=119.); 130.50, d,(J(C-H)=124.); 132,09,d,(J(C-H)=121); 134.45,d.(J(C-H)=122.). |
| | | | | | $^{31}P$ | Broadband decoupled; 38.1(TMP),s. |

Table 1 (continued)

N.M.R. Spectroscopic Data

| Example | Analysis (%) a | | | | N.M.R. data b | |
|---|---|---|---|---|---|---|
| | C | H | Metal | Halide | | |
| 7 | 36.25<br>(36.10) | 7.18<br>(6.73) | 9.53<br>(9.80) | 26.92<br>(26.68) | $^1H$ | 1.55,2,c,$2H_b$; 1.63,6,m,$2CH_3$; 1.70,6,m,$2CH_3$; 1.78,2,c,$2H_a$, 2.17,2,m,$2H_c$; 2.60,c,2,$2H_b$ |
| | | | | | $^{13}C$ | Broadband proton decoupled; 10.29,d of m, (J(d,m)=52.8,6.3),$2CH_3$; 13.97, d of m, (J(d,m)=28.7,8.5).$2CH_3$; 21.59,s,$c_a$; 30.16, unresolved t,<br><br>$C_b$; 30.73,s,$C_b$; 48.27, binomial sextet, (J(C 15.1),$2C_c$.<br><br>Proton coupled; 9.85, quartet, (J(C-H)=81.9) $2CH_3$; 13.58,quartet,(J(C-H)=84.5),$2CH_3$; 21.5 t, (J(C-H)=83.1),$C_a$; 30.15,t,(J(C-H)=88.5),C 30.74,t,(J(C-H)=90.2),$C_b$;48.30,d of c, (J(C 94.7).$2C_c$. |
| | | | | | $^{31}P$ | Broadband decoupled 1.29(TMP),s. |

**Table 1 (continued)**

**N.M.R. Spectroscopic Data**

| Example | Analysis (%) a | | | | N.M.R. data b | |
|---|---|---|---|---|---|---|
| | C | H | Metal | Halide | | |
| 8 | air sensitive - not determined | | | | $^{1}H$ | 0.92,2,c,$2H_c$; 1.44,4,c,$4H_b$ ; 2.03,4,c,$4H_a$ |
| | | | | | $^{13}C$ | Broadband decoupled; 24.94,2, unresolved t, $2C_b$, 25.42,2,s,$2C_a$; 50.01,2,t,(J(P-C)=20.6), $2C_c$. |
| | | | | | | Proton coupled; 24.92,2,t,(J(C-H)=65.4),$2C_b$, 25.38,2,t,(J(C-H)=56.7),$2C_a$; 50.00,2, d of t (J(P-C)=20.5, J(C-H)=70.6),$2C_c$. |
| | | | | | $^{31}P$ | Broadband decoupled 192.9(TMP),s. |

Table 1 (continued)

N.M.R. Spectroscopic Data

| Example | Analysis (%) [a] | | | | N.M.R. data [b] | |
|---|---|---|---|---|---|---|
| | C | H | Metal | Halide | | |
| 9 | 79.10<br>(79.63) | 6.62<br>(6.68) | -<br>- | -<br>- | $^1H$ | 1.50,1,broad d,(J(?)=13.5); 1.60,1,broad d, (J(?)=8.); 2.00,1,apparent quintet,(J(?)=10. 2.40,1,broad quartet,(J(?)=13.3); 3.56,1,s; 6.18,2,c; 6.31,8,c; 6.40,4,c. |
| | | | | | $^{13}C$ | Broadband decoupled, 23.22,1,s,$2C_a$, 24.61.1 (J(P-C)=9.9),$2C_b$; 34.59,1,t,(J(P-C)=20.4),$2C_c$ 128.75,4,d,(J(P-C)=4.1); 129.21,2,d,(J(P-C)= 11.8); 134.10,4,c; 137.75, weak but present, d of d, (J(P-C)=56.6, 15.7).<br><br>Proton coupled; 24.10, apparent quartet, interpretted as two overlapping t,(J(C-H)=79.2),$2C_a$, $2C_b$; 34.83,d,(J(C-H)=78.3,$2C_c$; 128.76,d of d, (J(C-H)=94.8); 129.24,d of d, (J(C-H)= 94.3); 134.08, d of d, (J(C-H)=94.3,J(C-P)=18.9); 137.75, weak but present d of d, (J(P-C)=56.6, 15.6), probably quaternary P-C carbon. |
| | | | | | $^{31}P$ | Broadband decoupled; -17.6(TMP) s. |

Table 1 (continued)

N.M.R. Spectroscopic Data

| Example | Analysis (%) a | | | | N.M.R. data b | |
|---|---|---|---|---|---|---|
| | C | H | Metal | Halide | | |
| 10 | 53.56 (53.70) | 4.59 (4.51) | 8.49 (8.75) | 24.94 (23.80) | $^{1}H$ | 0.89,4, unresolved d; 1.54,2,s,1.91,4,c; 7.62,6, apparent t of t; 7.78,2,quartet, ortho-protons; 8.32,2, quartet, ortho-protons. |
| | | | | | $^{13}C$ | Broadband decoupled; 25.68,2,s,$2C_a$; 29.77,2,s, $2C_b$, 40.69,2,t,(J(P-C)=22.2),$2C_c$; 128.90,4,s; 128.95,4,s; 131.81,2,s; 132.70,2,s; 133.60, 4,s; 137.29,4,s. |
| | | | | | $^{31}P$ | Broadband decoupled; 63.9(TMP),s. |

**Table 1 (continued)**

**N.M.R. Spectroscopic Data**

| Example | Analysis (%) [a] | | | | N.M.R. data [b] | |
|---|---|---|---|---|---|---|
| | C | H | Metal | Halide | | |
| 11 | 62.04 (61.90) | 5.31 (5.19) | 10.43 (10.08) | 11.92 (12.18) | $^1H$ | 0.92,4,d; 1.56,2,c; 1.95,4,c; 7.62,6, m of nine lines; 7.78,2, quartet, ortho-protons; 8.30,2, quartet, ortho-protons. |
| | | | | | $^{13}C$ | Broadband decoupled; 25.64,1,s,$2C_a$; 29.60,1, unresolved triplet, $2C_b$; 40.32,1,t,(J(P-C)=22.3), $2C_c$; 125.71, weak but present,t, (J(P-C)=27.1), quaternary C-P; 127.36, weak but present,t, (J(C-P)=22.9), quaternary C-P; 129.01,4,unresolved quartet; 131.82,1,s; 132.71, 1,s; 133.52,2, unresolved t; 137.06,2,unresolved t.<br><br>Proton coupled; 25.65,t,(J(C-H)=73.6),$2C_a$; 29.61, t,(J(C-H)=76.4),$2C_b$; 40.31, d of t, (J(P-C)=28.3, J(C-H)=81.1), $2C_c$; 129.02,d,(J(C-H)=147.); 131.83,d,(J(C-H)=142.); 132.71,d,(J(C-H=147.); 133.49,d,(J(C-H)=147.); 137.06,d,(J(C-H=145.). |
| | | | | | $^{31}P$ | Broadband decoupled; 57.1(TMP),s. |

Table 1 (continued)

N.M.R. Spectroscopic Data

| Example | Analysis (%) [a] | | | | N.M.R. data [b] | |
|---|---|---|---|---|---|---|
| | C | H | Metal | Halide | | |
| 12 | 61.86<br>(51.83) | 4.67<br>(4.58) | Mo=9.76<br>(Mo=14.52) | | $^{1}H$ | 0.67,1,broad; 1.06,1,apparent quintet,(J(C-H)= 11.6); 1.62,2,broad; 2.08,4,d(J(?)=10.1); 7.37,4,c; 7.55,2,c; 7.65,2,c. |
| | | | | | $^{13}C$ | Broadband proton decoupled; 26.08,2,s,2$C_a$, 31. 2,unresolved t, 2$C_b$; 40.87,2,t,(J(P-C)=19.4), 2$C_c$; 128.35,4,m; 128,96,4,m; 129.79,2,s; 130.3 2,s; 131.83,4,m; 134.08,4,m; 211.36,weak,s; 218.1 weak,s; 218.40,weak,s.<br><br>Proton coupled; 26.09,t,(J(C-H)=62.9),2$C_a$;<br>31.03,t,(J(C-H)=63.2),2$C_b$; 40.86,d,(J(C-H)= 65.3), 2$C_c$; 128.36,d,(J(C-H)=120.); 128.92,d, (J(C-H)=122.); 129.79,d,(J(C-H)=126.); 130.35, d,(J(C-H)=120.); 131.82,d,(J(C-H)=135); 134.09 d,(J(C-H)=120.); 211.36, unresolved t; 218.15, s; 218.40, d, (J(?)=11.3). |
| | | | | | $^{31}P$ | Broadband decoupled; 59.6(TMP),s. |

In Table 1:

a Calculated values in parentheses

b Given as : chemical shift (delta), relative intensity (multiplicity) (Jm Hz, for J(H-H) unless otherwise stated), assignment

c In $C_6D_6$

d In $CD_2Cl_2$

e Contains one mole $CH_2Cl_2$, solvent used for recrystallisation. Mass spectrum shows highest bands at $M/_e$=577 corresponding to the ion $C_{29}H_{28}BrNiP_2$+

TABLE 2

Infrared Spectral Data

| PRODUCT OF EXAMPLE | WAVE NUMBER ($cm^{-1}$) INTENSITY |
|---|---|
| 2 | 420w, 445s, 450sh, 480s, 489s, 499sh 509s, 541w, 599br, 699s, 779sh, 745s 849w, 880w, 894w, 900w, 909w, 916w, 997m, 1024s, 1069m, 1089m, 1152w, 1305w, 1430m, 1584w |
| 4 | $294_w$, Ni-Br stretch |
| 5 | 329s, Ni-Cl stretch |
| 9 | 347w, 403m, 429m, 456m, 469s, 477s, 504s, 532m, 547w, 599s, 691s, 719sh, 727s, 733s, 741s, 789w,822w, 893w, 988m, 1017m, 1059w, 1079w, 1149w, 1270w, 1580w. |
| 10 | 295w, Ni-Br stretch |
| 11 | 327w, Ni-Cl stretch |

B. OPTICAL ROTATION EXPERIMENTS

Example 13

Trans-1,2-bis(diphenylphosphino)cyclopentanenickel(11) bromide

Following the observation that the complex, trans-1,2-bis-(diphenylphosphino)cyclopentanenickel(11) bromide.$CH_2Cl_2$ underwent spontaneous resolution on crystallization from dichloromethane into enantiomerically pure crystals, further measurements (involving 110 separate determinations) have been made on this complex, on the free ligand and on related complexes to see if the phenomenon was more general.

The single crystal or, in some instances, single crystalline fragments broken off of a cluster of crystals, were selected under a microscope and weighed in aluminium boats to 0.001mg. The crystals used for the metal complexes were geneally about 1.0mg, but single crystals as small as 0.1mg gave satisfactory results. There were, in fact, indications that for very large (300mg) single crystals, the chances of inclusion of a growth on the crystal of the opposite chirality became greater. The selected crystals were quickly rinsed in a little $CH_2Cl_2$ on a porous glass funnel, with suction applied to remove the solvent. All measurements were made at 20°C in dichloromethane. The high optical absorbance of the metal complexes required that the solutions be rather dilute, 0.1mg of compound per $cm^3$ of solvent or, in terms of the "C" used in the literature, $0.01g/100cm^3$ solvent, C = 0.01. The low concentrations introduced some scatter in the results, particularly for low observed rotations.

Specific rotations were calculated from the formula:

$$[alpha]^{20°}_{589nm} = 100 \times alpha/lc$$

where alpha = observed rotation in degrees

l = path length of cell in decimeters

c = concentration in $g/100cm^3$

Measurements (number of different samples measured given in parentheses) on trans-1,2-bis(diphenylphosphino)cyclopentanenickel bromide (containing a mole of $CH_2Cl_2$ in the weighed crystal) gave $[alpha]^{20}_{589}$ values of +311±29(11) and -323±22(14).

Example 14

Trans-1,2-bis(diphenylphosphino)cyclopentanenickel chloride

Whilst crystals were grown from $CH_2Cl_2$ elemental analyses indicated that the crystalline material did not contain $CH_2Cl_2$. The optical rotation measurements suggest that this compound crystallises as either racemic crystals or as enantiomerically pure conglomerates. From a given batch of crystals some would give [alpha]=0 while others showed optical activity. The results for this compound were (number of different samples measured given in parentheses):

$$[alpha]_{589}^{20} = 0(15)$$

$$[alpha]_{589}^{20} = +72\pm6(7), \text{ and}$$

$$[alpha]_{589}^{20} = -86\pm15(11).$$

Example 15

As has been noted hereinbefore, trans-1,2-bis-(diphenylphosphino)cyclopentane, can be liberated from the $NiBr_2$ complex by reaction with cyanide. A similar procedure using thiocyanate yielded a phosphine-nickel complex with two $SCH^-$ ligands replacing the $Br^-$ ligands. A typical experiment is described below.

Two single crystals (107.9, 63.5mg), grown by slow evaporation at constant temperature (22°C) from a $CH_2Cl_2$ solution in a covered crystallizing dish (120mm diameter), were selected under a microscope as being of the same chirality. A corner was broken off of each crystal(1.442, 1.124mg) for measurement of optical activity. The two large crystals (totalling 168.8mg) were ground up with a glass rod in the bottom of a Schlenk flask (250cm$^3$ volume). Sodium cyanide (0.601g) and a stirring bar were added to the flask and the air replaced with a nitrogen atmosphere.

Degassed ethanol (14.3g) was added and the mixture stirred vigourously for two hours with gentle warming, with gradual disappearance of the red crystalline nickel complex, leaving an off-white suspended solid. The ethanol was removed under reduced pressure and the remaining solid dried under vacuo. Degassed

benzene ($3 \times 10cm^3$) was added to the solid, the mixture being shaken after each addition and the benzene extract removed by filtration into a nitrogen atmosphere in a second Schlenk flask. A pale yellow residue of $Ni(CN)_2$ remained after the three extractions. The benzene was removed under reduced pressure, leaving a white solid which was dried in vacuo: yield 79.5mg, 71%.

The optical rotation data are given below for the nickel complex and for the free phosphine for this experiment. Note that while the (-)-R,R enantiomer of the nickel complex was used, the (+)-R,R enantiomer of the free phosphine results, with a change in the sign of the rotation. Crystallographic measurements, coupled with a measurement of optical rotation, confirmed the sign of rotation and configuration of the metal complex.

| Solute | Weight | Volume $CH_2Cl_2$ | alpha | [alpha] |
|---|---|---|---|---|
| Phosphine$NiBr_2 \cdot CH_2Cl_2$ | 1.124 mg | 10.0 $cm^3$ | -0.034° | -30 |
| " " " " | 1.442 | " " | -0.044 | -30 |
| Phosphine | 9.120 | " " | +0.163 | +17 |
| " " | 6.481 | " " | +0.115 | +17 |

C. CRYSTAL DATA

Example 16

Trans-1,2-bis(diphenylphosphino)cyclopentane

$C_{29}H_{28}P_2$,M=438, triclinic space group $P\bar{1}$,a=10.325(3), b=14.368(5), c=17.817(4) Angstrom, alpha = 110.465(2), beta = 92.983(3), gamma = 99.786(3)°, U = 2422 $Angstrom^3$, Z = 4, $D_c$= 1.20g $cm^{-3}$. Intensities of 10 162 reflections were measured (2 x $theta_{max}$ = 56°) on a CAD-4 diffractometer using graphite-monochromated Mo-Kalpha radiation. 6355 Independent reflections [I greater than 3 sigma(I)], uncorrected for absorption [μ(Mo-Kalpha)=1.97 $cm^{-1}$], were used in the refinement. The structure was solved using a combination of direct methods (MULTAN-80) and Fourier synthesis. It was refined using a cascade approach to the large-block approximation to the normal matrix. All non-hydrogen atoms were refined anisotropically and hydrogen atoms were then placed geometrically (C-H=1.0 Angstrom). The final R-value is 0.039(Rw=0.044).

The crystal structure is illustrated with the phenyl hydrogen atoms omitted for clarity in Figure 1. Selected distances and angles are: C(1)-P(1)1.858(2), C(2)-P(2) 1.867(2), C(1)-C(2) 1.544(3) Angstrom; P(1)-C(1)-C(2) 109.8(1), P(2)-C(2)-C(1) 109.2(2), C(3)-C(2)-C(1) 102.9(2), C(2)-C(1)-C(5) 103.7(2). The configuration is (S,S).

Example 17

Trans-1,2-bis(diphenylphosphino)cyclopentanenickel(II) bromide. dichloromethane

$C_{29}H_{28}Br_2NiP_2.CH_2Cl_2$,M=741.9, monoclinic, space group $P2_1$,a= 8.612(2), b=14.996(4), c=11.819(2) Angstrom, Beta=97.616(2)°,U=1.513 $Angstrom^3$, Z=2, $D_c$=1.63g $cm^{-3}$. Intensities of 7734 reflections were measured (2 Theta $_{max}$ = 54°) on a CAD-4 diffractometer using grphite-monochromated Mo-$K_{alpha}$ radiation. 4268 Independent reflections [I greater than 3 sigma (I)], corrected for absorption [$\mu$(Mo-$K_{alpha}$)= 37.4 $cm^{-1}$], were used in the refinement. The structure was solved using a combination of direct methods (MULTAN-80) and Fourier synthesis. It was refined using the large-block approximation to the normal matrix. All non-hydrogen atoms were refined anisotropically and hydrogen atoms were then placed geometrically (C-H = 1.0 Angstrom). The polarity of the structure was determined by refining a "Polarity Factor" (cf D. Rogers, Acta Crystallogr., Sect. A, 1981, 37,734). The origin was defined by constraining the sum of the y shifts to be zero. The final refinement of 335 parameters led to R = 0.036 (Rw=0.048) and a polarity of 1.02(2).

The crystal structure with the phenyl hydrogen atoms omitted for clarity is shown in Figure 2. Selected distances and angles are: Ni-Br(1) 2.336(1), Ni-Br(2) 2.347(1), Ni-P(1) 2.178(1), Ni-P(2) 2.158(1), P(1)-C(1) 1.843(5), P(2)-C(2) 1.829, C(1)-C(2) 1.535(7) Angstrom; Br-Ni-Br 94.91(3), Br(1)-Ni-P(1) 92.10(4), Br(2)-Ni-P(2) 86.84(4), P(1)-Ni-P(2) 88.33, P(1)-C(1)-C(2) 105.7(4), C(1)-C(2)-P(2) 107.0(4)°. The configuration is (R,R).

USE IN ASSYMETRIC SYNTHESIS

Example 18

Catalytic hydrogenation of methyl(N-benzoyl)dehydrophenylalanine and (N-benzoyl)dehydrophenylalanine

The compound $[Rh(1,5-C_8H_{12})Cl]_2$ 0.21g, 8.7 mmol) in methanol was treated with (S,S)-trans-bis-1,2- (diphenylphosphine) cyclopentane (0.38g, 8.7 mmol) and the mixture was stirred for 15 minutes. The atmosphere was replaced with dihydrogen and methyl (N-benzoyl) dehydrophenylalanine (0.122g, 0.43 mmol) was added. The mixture was stirred for 12 hours. The solvent was removed under reduced pressure and the acid ester was analysed for completeness of conversion. The product was dissolved in sodium hydroxide solution (1.0M, 5 $cm^3$) and washed with chloroform (2 x 5 $cm^3$). The solution was then acidified with concentrated hydrochloric acid and extracted with diethyl ether (3 x 10 $cm^3$). The ethereal layers were washed with water (2 x 10 $cm^3$) and dried over anhydrous magnesium sulphate. The solvent was then removed under reduced pressure and the residue was submitted for determination of the optical rotation. The residue was also converted to the derived N,N-dimethylamide, as follows: to a solution of the product acid (0.5 mmol) in dichloromethane (7.5 $cm^3$) was added oxalyl chloride (0.25g, 2 mmol) with stirring. After 1 hour the solution was evaporated under reduced pressure and redissolved in dichloromethane (5 $cm^3$) and evaporated again under reduced pressure. The residue was redissolved in dried dichloromethane and dimethylamine solution (70%, 2.5 $cm^4$) was added slowly at 0°C with stirring. After 5 minutes the layers were separated, the organic layer was washed with saturated aqueous sodium chloride (2 x 5 $cm^3$), water (2 x 5 $cm^3$) before drying over anhydrous potassium carbonate and removing the solvent under reduced pressure.

In the proton n.m.r. spectrum ($CCl_4$, 90 MHz) in the presence of tris(3-heptafluorobutyryl-d-camphorato) europium(III) the alpha-Me doublets of the diastereomeric amide complexes are resolved (delta = 0.25ppm) so that the product enantiomer excess is readily determined by integration of the separated isomers. The enantiomeric excess

was found to be 100%.

Example 19

Catalytic hydrogenation of (N-benzoyl)dehydrophenylalanine

The procedure of Example 18 was repeated. The enantiomeric excess was found to be 100%.

Claims:

1. A process for the production of a trans-1,2-bis(dihalophosphino)cycloalkane which process comprises reacting a $C_3$ to $C_{12}$ cyclic olefin with a trivalent phosphorus compound of the formula:-

$$PX_3$$

wherein X is chlorine or bromine in the presence of elemental phosphorus.

2. A process according to claim 1 wherein the cyclic olefin is a $C_5$ to $C_{10}$ cyclic olefin.

3. A process according to either claim 1 or claim 2 wherein the cyclic olefin is either cyclopentene or cyclohexene.

4. A process according to any one of the preceding claims wherein the trans-1,2-bis(dihalophosphino)cycloalkane is reacted with an (X)-containing carbon nucleophile wherein X is hydrocarbyl or alkoxy under appropriate reaction conditions to produce a trans-1,2-bis(di(X)-phosphino)cycloalkane wherein X is hydrocarbyl or alkoxy.

5. A process according to claim 4 wherein the (X)-containing carbon nucleophile is either an alkoxy magnesium halide or a hydrocarbyl magnesium halide.

6. A process according to claim 5 wherein the hydrocarbyl substituent of the hydrocarbyl magnesium halide is an alkyl group, a cycloalkyl group or a phenyl group.

7. A process according to either claim 5 or claim 6 wherein the halide moiety is either chloride or bromide.

8. A process according to any one of the preceding claims wherein in a first step cyclopentene is reacted with the trivalent phosphorus compound to produce trans-1,2-(dihalophosphino)cyclopentane, which in a second step is reacted with a phenyl magnesium halide to produce

trans-1,2-bis(diphenylphosphino)cyclopentane which is thereafter reacted with a nickel(II) halide in alcoholic media to produce the corresponding nickel(II) halide adduct.

9. A process according to claim 8 wherein the nickel(II) halide adduct is crystallised from dichloromethane to produce a conglomerate of (+)-(S,S) and (-)-(S,S) enantiomers of nickel(II) halide [trans-1,2-bis(diphenylphosphino)cyclopentane] dichloromethane.

10. A process according to claim 9 wherein the (+)-(S,S) enantiomer is separated from the conglomerate and treated with sodium cyanide to recover the (-)-(S,S)-trans-1,2-bis(diphenylphosphino)cyclopentane.

11. A process according to any one of claims 4 to 7 wherein the trans-1,2-bis(di(X)phosphino)cycloalkane wherein X is hydrocarbyl or alkoxy is resolved into (+)-(S,S) and (-)-(S,S) enantiomers.

12. Use of the (+)-(S,S) and (-)-(S,S) enantiomers of claim 11 as chiral ligands in assymetric syntheses.

13. The use as claimed in claim 12 wherein the syntheses are hydrogenation, hydrosilylation or carbonylation.

14. Trans-1,2-bis(dihalophosphino)cycloalkanes wherein the alkane moiety contains from 3 to 12 carbon atoms.

15. Trans-1,2-bis[di(X)-phosphino]cycloalkanes wherein the alkane moiety contains from 3 to 12 carbon atoms and X is either a hydrocarbyl group or an alkoxy group.

16. The (+)-(S,S) enantiomers of trans-1,2-bis[di(X)-phosphino]-cycloalkanes as claimed in claim 15.

17. The (-)-(S,S) enantiomers of trans-1,2-bis[di(X)-phosphino]-cycloalkanes as claimed in claim 15.

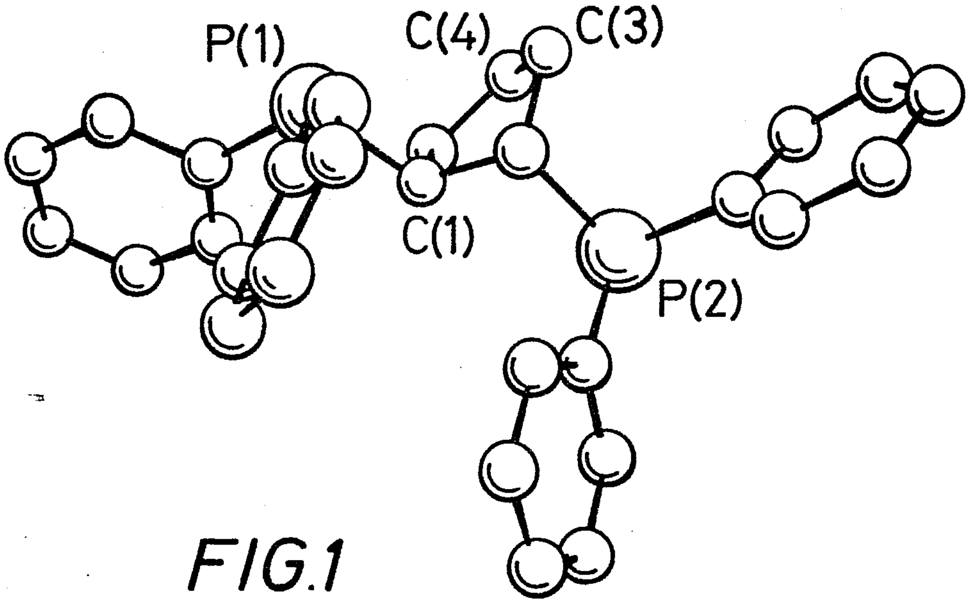

FIG.1

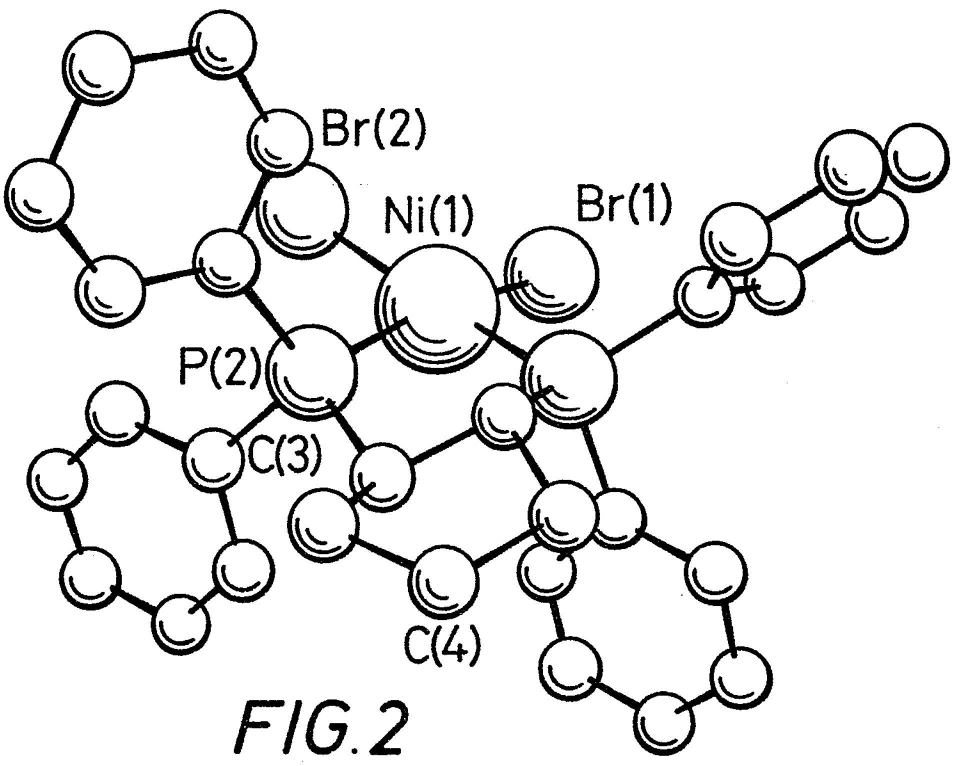

FIG.2

European Patent Office

**EUROPEAN SEARCH REPORT**

0117156

Application number

EP 84 30 1126

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | SYNTHESIS, no. 9, 1981, pages 740-741, Georg Thieme Verlag, Stuttgart, DE<br>A. KLEEMANN et al.: "Asymmetric synthesis of peptides" * Page 740, formula 7 *<br>--- | 9-13, 15,16 | C 07 F 9/50<br>C 07 F 9/48<br>C 07 F 9/52<br>C 07 C 103/50 |
| X | BULL. ACADEMY SCIENCES USSR, vol. 26, no. 5, 1977, pages 1094-1096<br>YU. M. POLIKARPOV et al.: "Synthesis and properties of some 1,2-cyclohexylenetetra-chlorodiphosphine derivatives" * Page 1094, formulas I,IV; page 1095, formula V *<br>--- | 1-9,14,15 | |
| X | INORGANIC CHEMISTRY, vol. 20, no. 11, 1981, pages 3616-3623, American Chemical Society<br>E.P. KYBA et al.: "Catalytic and structural studies of the rhodium(I) complexes of the norphos and renorphos ligands" * Page 3617; page 3621, "renorphos" (12) *<br>--- | 12,13, 15,17 | TECHNICAL FIELDS SEARCHED (Int. Cl. 3)<br>C 07 F 9/00 |
| D,X | US-A-3 976 690 (ARTHUR D.F. TOY)<br>* Claim 1 *<br>--- -/- | 1-3 | |

The present search report has been drawn up for all claims

| Place of search | Date of completion of the search | Examiner |
|---|---|---|
| THE HAGUE | 21-05-1984 | BESLIER L.M. |

**CATEGORY OF CITED DOCUMENTS**

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82

0117156

European Patent Office

# EUROPEAN SEARCH REPORT

Application number

EP 84 30 1126

## DOCUMENTS CONSIDERED TO BE RELEVANT

Page 2

| Category | Citation of document with indication, where appropriate, of relevant passages | Relevant to claim | CLASSIFICATION OF THE APPLICATION (Int. Cl. 3) |
|---|---|---|---|
| P,X | J. CHEM. SOC., CHEM. COMMUN., no. 16, 1983, pages 895-896 D.L. ALLEN et al.: "A new route to chiral bis-tertiary phosphine ligands: synthesis, resolution, and crystal structure of trans-bis-1,2-(diphenylphosphino) -cyclopentane and the nickel adduct NiBr2[trans-1,2-(PPh2)2C5H8]" * Whole article * | 1-17 | |
| | ----- | | |
| | | | TECHNICAL FIELDS SEARCHED (Int. Cl. 3) |

The present search report has been drawn up for all claims

| Place of search | Date of completion of the search | Examiner |
|---|---|---|
| THE HAGUE | 21-05-1984 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503. 03.82